# EUROPEAN PATENT APPLICATION

(11) **EP 4 398 083 A1**
(43) Date of publication of application: **10.07.2024**
(21) Application number: 22906186.6
(22) Date of filing: 18.11.2022
(51) Int. Cl.: G06F 3/04817, G06Q 20/06, G06Q 50/00

(54) **VIRTUAL RESOURCE TRANSFER METHOD AND APPARATUS, AND DEVICE, READABLE STORAGE MEDIUM AND PRODUCT**

(30) Priority: 17.12.2021 CN 202111552809
(71) Applicant: Beijing Zitiao Network Technology Co., Ltd., Beijing 100190 (CN)
(72) Inventor: HE, Siqi, Beijing 100086 (CN); WEI, Mingxin, Beijing 100086 (CN); ZHAO, Yuxuan, Beijing 100086 (CN)
(74) Representative: Dentons UK and Middle East LLP
(86) International application number: PCT/CN2022/133013
(87) International publication number: WO 2023/109434

(57) **Abstract**

A virtual resource transfer method and apparatus, and a device, a readable storage medium, a product and a program. In a target application, the method comprises: acquiring a first state virtual resource (101), wherein the first state virtual resource is sent by a resource issuer to a first user; in response to a preset operation of the first user, generating target media content on the basis of the first state virtual resource (102), wherein the target media content is associated with the first state virtual resource; and in response to a publishing operation of the first user for the target media content, publishing the target media content in the target application, such that the first state virtual resource is transformed into a second state virtual resource, wherein the second state virtual resource is configured to be able to be at least partially transferred to the first user and/or a second user by means of the target media content (103).

## Description

### CROSS-REFERENCE TO RELATED APPLICATION

The present application claims the priority to Chinese patent application No. 202111552809.1, filed on December 17, 2021, entitled "Virtual Resource Transfer Method, Apparatus, Device, Readable Storage Medium and Product," and the entire disclosure of which is incorporated herein by reference as portion of the present application.

### TECHNICAL FIELD

The embodiments of the present disclosure relate to the technical field of computer and network communication, in particular to a virtual resource transfer method, apparatus, device, readable storage medium, product and program.

### BACKGROUND

With the development of science and technology, all kinds of application software have gradually entered users' lives. In order to enrich users' spare time, the current application software puts forward some virtual resource games, in which users can receive virtual resources or send virtual resources to friends. However, the existing virtual resource games are relatively simple and the interactivity needs to be improved.

### SUMMARY

The embodiment of the disclosure provides a virtual resource transfer method, apparatus, device, readable storage medium, product and program, which are used to solve the technical problems that the existing virtual resource transfer operation mode has single use function and poor flexibility and the virtual resource games are relatively simple.

In a first aspect, an embodiment of the present disclosure provides a virtual resource transfer method, in a target application, the method comprises: obtaining a first status virtual resource, wherein the first status virtual resource is sent to a first user by a resource distributor; generating a target media content based on the first status virtual resource in response to a preset operation of the first user, wherein the target media content is associated with the first status virtual resource; and posting the target media content in the target application in response to a posting operation of the first user on the target media content, so that the first status virtual resource is converted into a second status virtual resource, and the second status virtual resource is configured to be at least partially transferred to the first user and/or a second user via the target media content.

In a second aspect, an embodiment of the present disclosure provides a virtual resource transfer apparatus, wherein in a target application, the apparatus comprises: an obtaining module, configured to obtain a first status virtual resource, wherein the first status virtual resource is sent to a first user by a resource distributor; a generating module, configured to generate a target media content based on the first status virtual resource in response to a preset operation of the first user, wherein the target media content is associated with the first status virtual resource; a posting module, configured to post the target media content in the target application in response to a posting operation of the first user on the target media content, so that the virtual resource associated with the target media content is configured to be at least partially transferred to the first user and/or a second user via the target media content.

In a third aspect, an embodiment of the present disclosure provides an electronic device comprising: a processor and a memory; computer executable instructions are stored in the memory; and upon the processor executing the computer executable instructions stored in the memory, the processor executes the virtual resource transfer method as described in the first aspect and various possible designs of the first aspect.

In a fourth aspect, an embodiment of the present disclosure provides a computer readable storage medium, computer executable instructions are stored in the computer readable storage medium, and upon a processor executing the computer executable instructions, the virtual resource transfer method as described in the first aspect and various possible designs of the first aspect is realized.

In a fifth aspect, an embodiment of the present disclosure provides a computer program product comprising a computer program, upon the computer program being executed by a processor, the virtual resource transfer method as described in the first aspect and various possible designs of the first aspect is realized.

In a sixth aspect, an embodiment of the present disclosure provides a computer program, upon the computer program being executed by a processor, the virtual resource transfer method as described in the first aspect and various possible designs of the first aspect is realized.

According to the virtual resource transfer method, apparatus, device, readable storage medium, product and program provided by the present embodiments, a first status virtual resource is obtained, and a target media content is generated based on the first status virtual resource according to a first preset operation of a first user. The target media content is posted according to a posting operation of the first user on the target media content, so that the virtual resource associated with the target media content can be at least partially transferred to the first user and/or a second user via the target media content. Therefore, the first user can convert the inactive first status virtual resource sent by the resource distributor into the activated second status virtual resource by generating the target media resource activation, so that the user who postes the target media content and friends thereof can collect the virtual resource based on the target media resource.

### BRIEF DESCRIPTION OF DRAWINGS

In order to clearly illustrate the technical solutions in the embodiments of the present disclosure or in the prior art, the accompany drawings needed in describing the embodiments or the prior art will be briefly described in the following; it is obvious that the accompany drawings described as follows are merely some embodiments of the present disclosure. Based on these accompany drawings, those skilled in the art can obtain other drawings, without any inventive work.
FIG. 1 is a flowchart of a virtual resource transfer method provided by Embodiment 1 of the present disclosure;
FIG. 2 is a flowchart of a virtual resource transfer method provided by Embodiment 2 of the present disclosure;
FIG. 3 is a schematic diagram of an interactive interface provided by an embodiment of the present disclosure;
FIG. 4 is a schematic diagram of another interactive interface provided by an embodiment of the present disclosure;
FIG. 5 is a schematic diagram of another interactive interface provided by an embodiment of the present disclosure;
FIG. 6 is a flowchart of a virtual resource transfer method provided by Embodiment 3 of the present disclosure;
FIG. 7 is a schematic diagram of another interactive interface provided by an embodiment of the present disclosure;
FIG. 8 is a flowchart of a virtual resource transfer method provided by Embodiment 4 of the present disclosure;
FIG. 9 is a flowchart of a virtual resource transfer method provided by Embodiment 5 of the present disclosure;
FIG. 10 is a flowchart of a virtual resource transfer method provided by Embodiment 6 of the present disclosure;
FIG. 11 is a schematic diagram of another interactive interface provided by an embodiment of the present disclosure;
FIG. 12 is a schematic diagram of another interactive interface provided by an embodiment of the present disclosure;
FIG. 13 is a schematic structural diagram of a virtual resource transfer apparatus provided by Embodiment 7 of the present disclosure; and
FIG. 14 is a schematic structural diagram of an electronic device provided by Embodiment 8 of the present disclosure.

### DETAILED DESCRIPTION

In order to make the above objects, technical solutions and advantages of the present disclosure apparent, the technical solutions of the embodiments of the present disclosure will be described clearly and completely with the accompanying drawings. Obviously, the described embodiments are part of the embodiment of the present disclosure, but not all of them. Based on the embodiments of the present disclosure, all other embodiments obtained by those skilled in the art without any inventive work belong to the protection scope of the present disclosure.

Aiming at the technical problems that the existing virtual resource processing method has single use function and poor flexibility and the virtual resource games are relatively simple, the present disclosure provides a virtual resource transfer method, apparatus, device, readable storage medium, product and program.

It should be noted that the virtual resource transfer method, apparatus, device, readable storage medium, product and program provided by the present disclosure can be applied to any virtual resource transfer scenario.

In general, the existing virtual resource game involves users paying a certain amount of money into a virtual resource and then sending it out, the game is relatively simple, and the existing virtual resource transfer operation mode has single use function and poor flexibility, which cannot meet the personalized needs of the users.

In the present disclosure, a resource distributor can send a first status virtual resource to a first user. The first user can generate a target media content based on the first status virtual resource via a preset operation, and the target media content is associated with the first status virtual resource. When the target media content is posted, the first status virtual resource is converted into a second status virtual resource, so that the second status virtual resource is at least partially transferred to the first user and/or a second user. In the present embodiment, the first status virtual resource can be a virtual resource in an inactive status, and in the inactive status, the first status virtual resource cannot be used or transferred to the second user; the second status virtual resource is a virtual resource in an active status, and after the first status virtual resource is converted into the second status virtual resource, it can be used and transferred to the second user. Therefore, when transferring a virtual resource, the user can perform the transfer operation on the virtual resource according to the first status virtual resource sent by the resource distributor, which increases the interactivity with the second user.

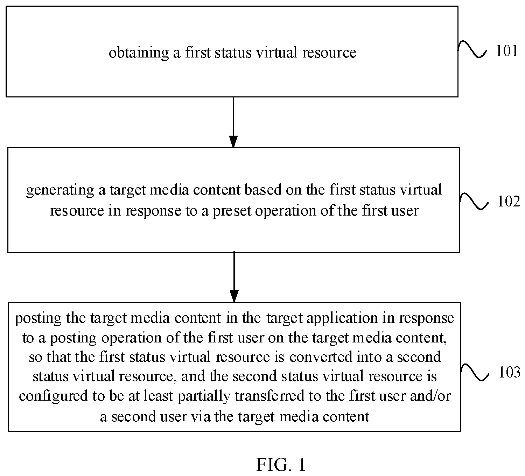

FIG. 1 is a flowchart of a virtual resource transfer method provided by Embodiment 1 of the present disclosure. As shown in FIG. 1, in a target application, the method includes:
Step 101: obtaining a first status virtual resource, wherein the first status virtual resource is sent to a first user by a resource distributor.

The execution subject of the present embodiment is a virtual resource transfer apparatus, the virtual resource transfer apparatus can be coupled to a terminal device, and the terminal device can perform human-machine interaction with the first user. Therefore, the transfer operation of the virtual resource can be realized according to various operations triggered by the first user through human-machine interaction.

Optionally, the virtual resource transfer apparatus can be coupled to a server, and the server can be in a communicative connection with a terminal device capable of human-machine interaction. Therefore, the server can obtain various operations triggered by the first user and obtained by the terminal device through human-machine interaction, so as to realize the transfer operation of the virtual resource.

In the present embodiment, the first user can obtain a first status virtual resource, and the first status virtual resource can be sent by a resource distributor. In different application scenarios, the resource distributor can be different objects. For example, the resource distributor can be a target application platform, and correspondingly, the first status virtual resource can be sent to the first user by the target application platform according to a preset strategy, and the preset strategy includes but is not limited to a preset time interval, a preset trigger condition, and the like. Optionally, the resource distributor can also be a second user who uses the target application, and there is a preset association relationship between the first user and the second user. Accordingly, the first status virtual resource can be sent in an in-station private message to the first user by the second user, or it can be sent after the first user triggers a virtual resource obtaining control associated with the media content posted by the second user.

Step 102: generating a target media content based on the first status virtual resource in response to a preset operation of the first user, wherein the target media content is associated with the first status virtual resource.

In the present embodiment, after obtaining the first status virtual resource, in order to realize the transfer operation of the first status virtual resource, the preset operation of the first user can be obtained, and the target media content can be generated based on the first status virtual resource according to the preset operation. The target media content is associated with the first status virtual resource, so that the virtual resource can be posted simultaneously when the target media content is posted.

Step 103: posting the target media content in the target application in response to a posting operation of the first user on the target media content, so that the first status virtual resource is converted into a second status virtual resource, and the second status virtual resource is configured to be at least partially transferred to the first user and/or a second user via the target media content.

In the present embodiment, after completing the generation of the target media content, a posting icon can be set on the display interface, and the first user can realize a posting operation on the target media content by triggering the posting icon. In response to the posting operation, the target media content can be posted in the target application, so that the first status virtual resource is activated, that is, the first status virtual resource is converted into a second status virtual resource; and then the second status virtual resource associated with the target media content can be posted together with the target media content. Furthermore, the virtual resource can be at least partially transferred to the first user and/or the second user via the target media content.

For example, in practical applications, the virtual resource can be a virtual resource in the target application, and the first user can obtain the virtual resource in the inactive status posted by the target application platform, and then generate a short video corresponding to the virtual resource through a preset operation, and post the short video, so that the virtual resource associated with the short video is activated, and the virtual resource in the activated status can be at least partially transferred to the first user and/or the second user through the trigger operation of the first user and/or the second user.

Specifically, there is a preset association relationship between the first user and the second user. The preset association relationship can be that the first user and the second user are friends, or that the first user and the second user pay attention to each other.

Further, on the basis of Embodiment 1, step 101 includes:

obtaining, in response to a trigger operation of a user on at least one virtual resource obtaining control on a preset interface, the first status virtual resource, wherein the preset interface includes at least one virtual resource obtaining control.

In the present embodiment, at least one virtual resource obtaining control can be set on the preset interface, and the first user can realize obtaining the first status virtual resource by performing a trigger operation on the at least one virtual resource obtaining control.

The preset interface can be a virtual resource obtaining active interface. The first user can enter the virtual resource obtaining active interface by triggering a preset activity entrance, and performs a trigger operation on at least one virtual resource obtaining control on the virtual resource obtaining active interface to realize obtaining the first status virtual resource. Alternatively, the preset interface can be a play interface of media content. In the play interface, if the currently played media content has an associated virtual resource, at least one virtual resource obtaining control can be displayed on the play interface, and the first user can realize obtaining the first status virtual resource by performing a trigger operation on at least one virtual resource obtaining control on the play interface.

In the virtual resource transfer method provided by the present embodiment, a first status virtual resource is obtained, and a target media content is generated based on the first status virtual resource according to a first preset operation of a first user. The target media content is posted according to a posting operation of the first user on the target media content, and the first status virtual resource is converted into the second status virtual resource, so that the second status virtual resource is at least partially transferred to the first user and/or the second user. Therefore, when transferring a virtual resource, the first user can not only perform a direct transfer operation on the virtual resource owned by himself, but also realize transferring the virtual resource based on the second status virtual resource which is obtained from activating the first status virtual resource sent by the resource distributor. The processing operation on the virtual resource is more flexible and can meet the actual needs of users.

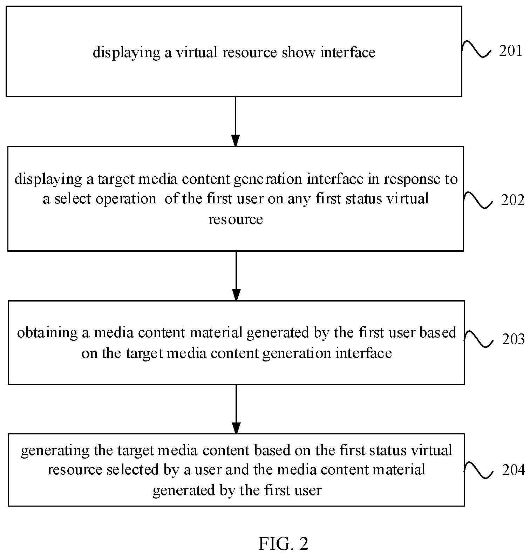

FIG. 2 is a flowchart of a virtual resource transfer method provided by Embodiment 2 of the present disclosure. On the basis of Embodiment 1, as shown in FIG. 2, step 102 includes:
Step 201: displaying a virtual resource show interface, wherein the virtual resource show interface includes at least one first status virtual resource currently obtained by the first user.
Step 202: displaying a target media content generation interface in response to a select operation of the first user on any first status virtual resource.
Step 203: obtaining a media content material generated by the first user based on the target media content generation interface.
Step 204: generating the target media content based on the first status virtual resource selected by a user and the media content material generated by the first user.

In the present embodiment, the first user can firstly select the first status virtual resource that currently needs to be transferred, and then generate the target media content based on the currently selected first status virtual resource. Specifically, a virtual resource show interface can be displayed on the display interface, and the virtual resource show interface includes at least one first status virtual resource currently obtained by the first user. For example, the display of the virtual resource show interface can be realized by the first user triggering a virtual resource detail interface icon on a personal interface, and in this case, the virtual resource show interface can show all the virtual resources owned by the user; or the display of the virtual resource show interface can be realized by a trigger operation of the first user on the currently obtained first status virtual resource after obtaining the first status virtual resource on the preset interface, and in this case, the virtual resource show interface can show the currently obtained first status virtual resource; and this is not limited in the present disclosure.

After displaying the virtual resource show interface, the first user can select the first status virtual resource that currently needs to be transferred according to actual demands. In response to a select operation of the first user on any first status virtual resource, a target media content generation interface is displayed, and the first user can perform a generation operation of a media content material in the target media content generation interface, and the virtual resource transfer apparatus can obtain the media content material generated by the first user. A target media content is generated based on the first status virtual resource selected by a user and the media content material generated by the first user, and the target media content is associated with the first status virtual resource.

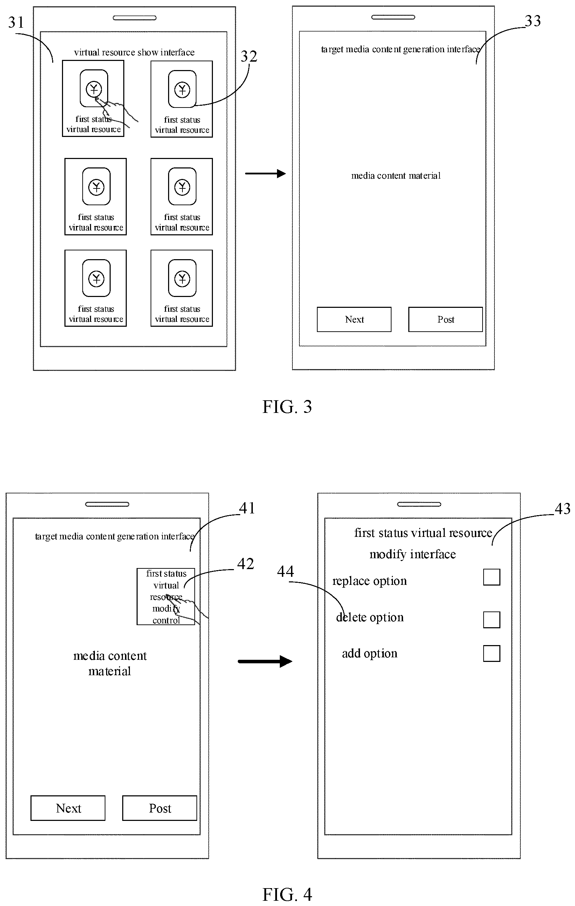

FIG. 3 is a schematic diagram of an interactive interface provided by an embodiment of the present disclosure. As shown in FIG. 3, at least one first status virtual resource 32 currently obtained by the first user can be displayed in the virtual resource show interface 31. The first user can select any first status virtual resource 32 according to actual demands. In response to a trigger operation of the first user on any first status virtual resource 32, a target media content generation interface 33 can be displayed, and the first user can perform a generation operation of a media content material in the target media content generation interface 33.

By firstly selecting the first status virtual resource that currently needs to be transferred, and then generating the target media content based on the currently selected first status virtual resource, the first status virtual resource can be activated, and the transfer operation of the activated virtual resource can be realized, which solves the problems of single function and poor flexibility of the existing virtual resource transfer operation and enriches the processing manners of transferring virtual resources.

Further, on the basis of any of the above embodiments, the target media content generation interface further includes a first status virtual resource modify control, and after step 202, the method further includes:
displaying a first status virtual resource modify interface on a display interface in response to a trigger operation of the first user on the first status virtual resource modify control;
modifying the first status virtual resource in response to a preset operation of the first user in the first status virtual resource modify interface.

In the present embodiment, after selecting the first status virtual resource, the first user can further perform a modify operation on the first status virtual resource according to actual demands. Specifically, the target media content generation interface further includes a first status virtual resource modify control. After displaying the target media content generation interface, if the first user needs to modify the first status virtual resource, the first user can perform a trigger operation on the first status virtual resource modify control in the target media content generation interface. Accordingly, the virtual resource transfer apparatus can display a first status virtual resource modify interface on the display interface according to the trigger operation. The first user can perform a preset operation on the first status virtual resource modify interface, so as to realize the modify operation on the virtual resource. The modify operation includes but is not limited to a replace operation, a delete operation and an add operation.

FIG. 4 is a schematic diagram of another interactive interface provided by an embodiment of the present disclosure. As shown in FIG. 4, the target media content generation interface 41 further includes a first status virtual resource modify control 42, the first user can perform a trigger operation on the first status virtual resource modify control 42 according to actual demands, and a first status virtual resource modify interface 43 can be displayed on the display interface according to the trigger operation. The first status virtual resource modify interface 43 can include modify options, including but not limited to a replace option 44, a delete option 45 and an add option 46, etc. The first user can select a corresponding option to perform a modify operation on the virtual resource according to actual demands.

By setting the first status virtual resource modify control, the first user can perform a modify operation on the selected first status virtual resource via the first status virtual resource modify control, so that the transfer operation of the virtual resource is more suitable for the actual demands of the first user and the user experience is improved.

Further, on the basis of any of the above embodiments, after step 202, the method further includes:
displaying a media content material generation manner list on the target media content generation interface, wherein the media content material generation manner list includes at least two media content material generation manners;
obtaining, in response to a select operation of the first user on any media content material generation manner, the media content material generated by the first user according to the selected media content material generation manner;
generating the target media content according to the first status virtual resource selected by the first user and the media content material generated by the first user.

In the present embodiment, the first user can generate media content materials through different media content material generation manners according to actual demands. Specifically, after displaying the target media content generation interface in response to the select operation of the first user on any first status virtual resource, a media content material generation manner list can be displayed on the target media content generation interface, wherein the media content material generation manner list includes at least two media content material generation manners. The first user can perform a select operation on the media content material generation manner in the media content material generation manner list according to actual demands. Accordingly, the virtual resource transfer apparatus can obtain, according to the selection operation, the media content material generated by the first user according to the selected media content material generation manner. The target media content is generated according to the first status virtual resource selected by the first user and the media content material generated by the first user.

Further, on the basis of any of the above embodiments, the media content material generation manners include a custom generation manner and a template shooting manner; and the obtaining, in response to the select operation of the first user on any media content material generation manner, the media content material generated by the first user according to the selected media content material generation manner includes:
if the media content material generation manner selected by the first user is the custom generation manner, obtaining a media content material customized and generated by the first user; or
if the media content material generation manner selected by the first user is the template shooting manner, generating a media content material based on a preset shooting template selected by the user.

In the present embodiment, the media content material generation manners include a custom generation manner and a template shooting manner. The virtual resource transfer apparatus can obtain, according to the select operation of the first user on the media content material generation manner, the media content material generated by the first user according to the selected media content material generation manner. Specifically, in the case where the media content material generation manner selected by the first user is the custom generation manner, it indicates that the first user can customize the generation of the media content material according to personal preferences. Accordingly, the virtual resource transfer apparatus can obtain the media content material customized and generated by the first user.

Optionally, in the case where the media content material generation manner selected by the first user is the template shooting manner, it indicates that the first user can realize the generation of the media content material according to the preset shooting template selected by the first user, and correspondingly, the virtual resource transfer apparatus can generate the media content material based on the preset shooting template selected by the user. The preset shooting templates include but are not limited to a shooting special effect, a shooting filter, a shooting action, etc.

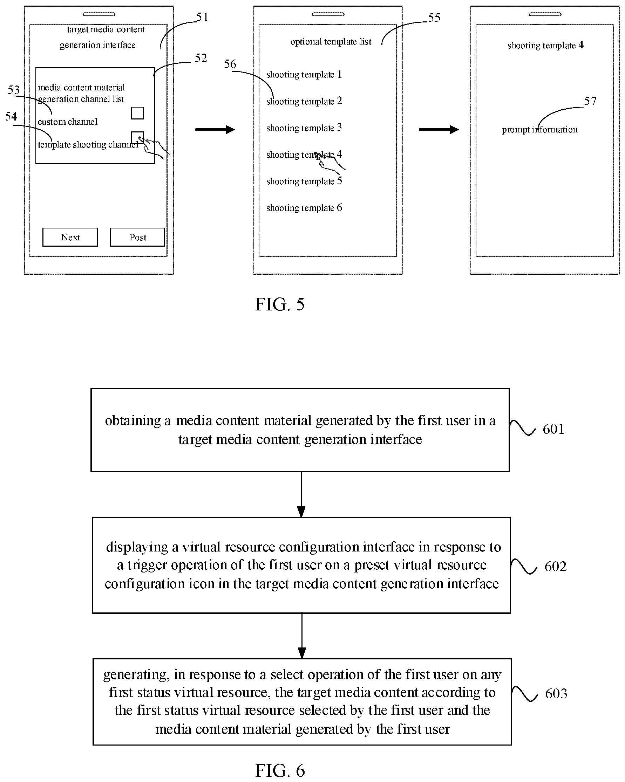

FIG. 5 is a schematic diagram of another interactive interface provided by an embodiment of the present disclosure. As shown in FIG. 5, a media content material generation manner list 52 can be displayed on the target media content generation interface 51, and the media content material generation manner list 52 includes a custom manner 53 and a template shooting manner 54. In the case where the first user performs a trigger operation on the template shooting manner 54, an optional template list 55 can be displayed on the display interface, and the optional template list includes all shooting templates 56 currently available for the first user to select from. According to the select operation of the first user, prompt information 57 corresponding to all shooting templates 56 selected by the user can be displayed on the display interface, and the prompt information 57 is specifically configured to instruct the user to realize the generation operation of the media content material according to the prompt information.

In the virtual resource transfer method provided by the present embodiment, by firstly selecting the first status virtual resource that currently needs to be transferred, and then generating the target media content based on the currently selected first status virtual resource, the transfer operation of the virtual resource can be realized based on the first status virtual resource, and the processing manners of transferring virtual resources are enriched. In addition, the media content material is generated according to the media content material generation manner selected by the first user, so that the generated media content material can better meet the personalized demands of the user and improve the user experience.

FIG. 6 is a flowchart of a virtual resource transfer method provided by Embodiment 3 of the present disclosure. On the basis of any of the above embodiments, as shown in FIG. 6, step 102 includes:
Step 601: obtaining a media content material generated by the first user in a target media content generation interface.
Step 602: displaying a virtual resource configuration interface in response to a trigger operation of the first user on a preset virtual resource configuration icon in the target media content generation interface, wherein the virtual resource configuration interface includes at least one first status virtual resource currently obtained by the first user.
Step 603: generating, in response to a select operation of the first user on any first status virtual resource, the target media content according to the first status virtual resource selected by the first user and the media content material generated by the first user.

In the present embodiment, the first user can firstly generate a media content material, and then select the first status virtual resource that currently needs to be transferred based on the currently generated media content material. Specifically, the virtual resource transfer apparatus can obtain the media content material generated by the first user in the target media content generation interface, and the media content material can be generated by the first user through a custom generation manner or through a template shooting manner, without being limited in the present disclosure.

Further, a virtual resource configuration icon is preset in the target media content generation interface, and after completing the generation of the media content material, the first user can realize the select operation on the first status virtual resource by performing a trigger operation on the virtual resource configuration icon. Accordingly, the virtual resource transfer apparatus can display a virtual resource configuration interface in response to the trigger operation, wherein the virtual resource configuration interface includes at least one first status virtual resource currently obtained by the first user. The first user can select the first status virtual resource that currently needs to be transferred according to actual demands. In response to the select operation of the first user on any first status virtual resource, the target media content is generated according to the first status virtual resource selected by the first user and the media content material generated by the first user.

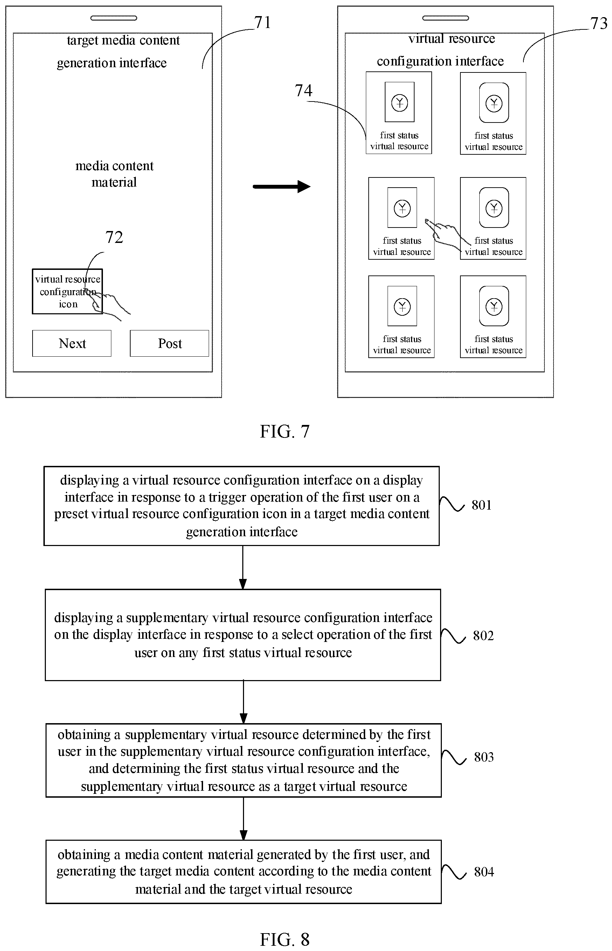

FIG. 7 is a schematic diagram of another interactive interface provided by an embodiment of the present disclosure. As shown in FIG. 7, a virtual resource configuration icon 72 can be set in the target media content generation interface 71. After the first user generates the media content material in the target media content generation interface 71, a virtual resource configuration interface 73 can be displayed by a trigger operation on the virtual resource configuration icon 72, and the virtual resource configuration interface 73 includes at least one first status virtual resource 74 currently obtained by the first user.

In the virtual resource transfer method provided by the present embodiment, by firstly generating the media content material, and then selecting the first status virtual resource that currently needs to be transferred based on the currently generated media content material, the transfer operation of the virtual resource can be realized based on the first status virtual resource, which solves the problems of single function and poor flexibility of the existing virtual resource transfer operation and enriches the processing manners of transferring virtual resources.

FIG. 8 is a flowchart of a virtual resource transfer method provided by Embodiment 4 of the present disclosure. On the basis of any of the above embodiments, as shown in FIG. 8, step 102 includes:
Step 801: displaying a virtual resource configuration interface on a display interface in response to a trigger operation of the first user on a preset virtual resource configuration icon in a target media content generation interface, wherein the virtual resource configuration interface includes at least one first status virtual resource currently obtained by the first user.
Step 802: displaying a supplementary virtual resource configuration interface on the display interface in response to a select operation of the first user on any first status virtual resource.
Step 803: obtaining a supplementary virtual resource determined by the first user in the supplementary virtual resource configuration interface, and determining the first status virtual resource and the supplementary virtual resource as a target virtual resource.
Step 804: obtaining a media content material generated by the first user, and generating the target media content according to the media content material and the target virtual resource.

In the present embodiment, in the case where the amount of the virtual resource that the first user currently needs to transfer is greater than the amount of the first status virtual resource, the first user can further use a virtual resource owned by himself/herself or other first status virtual resource as a supplementary virtual resource on the basis of the selected virtual resource, and determine a target virtual resource according to the supplementary virtual resource and the first status virtual resource together. Specifically, a virtual resource configuration icon is preset in the target media content generation interface. The virtual resource transfer apparatus can display a virtual resource configuration interface on the display interface in response to a trigger operation of the first user on the virtual resource configuration icon, wherein the virtual resource configuration interface includes at least one first status virtual resource currently obtained by the first user.

Further, the first user can perform a select operation on any first status virtual resource according to actual demands, and in response to the select operation, a supplementary virtual resource configuration interface is displayed on the display interface. The first user can determine the current supplementary virtual resource in the supplementary virtual resource configuration interface. Optionally, the user can use a virtual resource owned by himself/herself as a supplementary virtual resource, or can use other first status virtual resource as a supplementary virtual resource, which is not limited in the present disclosure. A target virtual resource is determined according to the supplementary virtual resource and the first status virtual resource together. The supplementary virtual resource includes one or more of a first status virtual resource, a second status virtual resource and a virtual resource customized and input by the first user.

After determining the target virtual resource, the media content material generated by the first user can be obtained, and the target media content can be generated according to the media content material and the target virtual resource.

In the virtual resource transfer method provided by the present embodiment, in the case where the first status virtual resource cannot meet the user's demands, a supplementary virtual resource configured by the user is obtained, and a target virtual resource is determined according to the supplementary virtual resource and the first status virtual resource together, so that the transfer operation of the virtual resource can better meet the personalized demands of the user and improve the user experience.

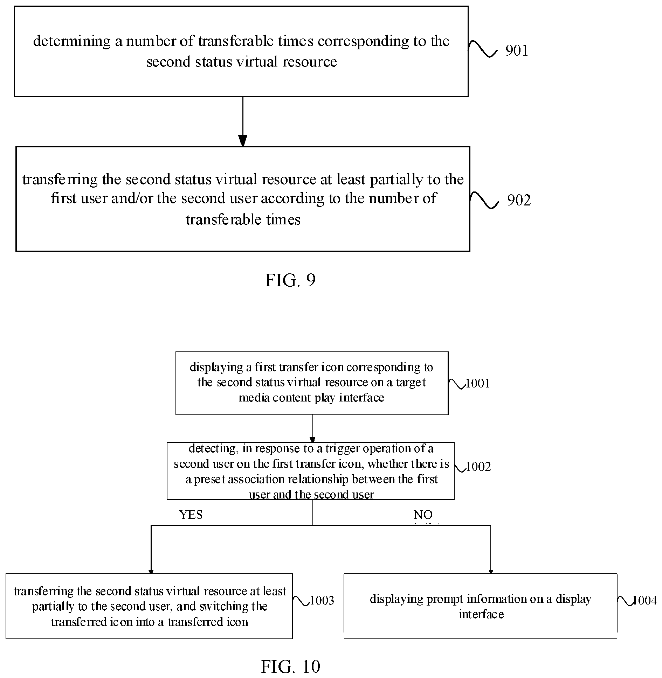

FIG. 9 is a flowchart of a virtual resource transfer method provided by Embodiment 5 of the present disclosure. On the basis of any of the above embodiments, as shown in FIG. 9, after step 103, the method further includes:
Step 901: determining a number of transferable times corresponding to the second status virtual resource.
Step 902: transferring the second status virtual resource at least partially to the first user and/or the second user according to the number of transferable times, wherein a count of the first user and/or the second user matches the number of transferable times.

In the present embodiment, each second status virtual resource corresponds to a different resource amount and a different number of transferable times. For example, it can correspond to 10 units of second status virtual resources and five transferable times. Therefore, in order to realize the transfer operation of the second status virtual resource, after posting the target media content, it is necessary to determine the number of transferable times corresponding to the second status virtual resource. According to the number of transferable times, the second status virtual resource is at least partially transferred to the first user and/or the second user, wherein the number of the first user and/or the second user matches the number of transferable times.

Following the above example, the second status virtual resource with five transferable times can be transferred to five second users.

Further, on the basis of any of the above embodiments, step 902 includes:
dividing the second status virtual resource averagely into third virtual resources according to the number of transferable times, so that the third virtual resources are transferred to the first user and/or the second user; or
transferring at least part of the second status virtual resource randomly to the first user and/or the second user according to the number of transferable times.

In the present embodiment, after determining the number of transferable times corresponding to the second status virtual resource, the second status virtual resource can be averagely divided into third virtual resources according to the number of transferable times, so that the third virtual resources can be transferred to the first user and/or the second user. Following the above example, 10 units of second status virtual resources can be averagely transferred to five first users and/or second users equally, that is, each first user and/or second user gets 2 units of third virtual resources.

Optionally, at least part of the second status virtual resource can be randomly transferred to the first user and/or the second user according to the number of transferable times. That is, the amount of second status virtual resources available to the first user and/or the second user is different.

In the virtual resource transfer method provided by the present embodiment, by determining the number of transferable times corresponding to the virtual resource, and transferring the second status virtual resource to the first user and/or the second user averagely or randomly according to the number of transferable times, the first user and/or the second user can have fun in the virtual resource transfer operation in different modes, which solves the problems of single function and poor flexibility of the existing virtual resource transfer operation, enriches the gameplay of the virtual resource transfer operation, and further improves the user experience.

Optionally, on the basis of any of the above embodiments, the method further includes:
displaying a first transfer icon corresponding to the second status virtual resource on a play interface of the target media content;
transferring the second status virtual resource at least partially to the first user in response to a trigger operation of the first user on the first transfer icon.

In the present embodiment, after posting the target media content in the target application, the first user can perform a transfer operation on the second status virtual resource associated with the target media content. Specifically, in the case where the first user plays the target media content on the play interface of the target media content, the first transfer icon corresponding to the second status virtual resource can be displayed on the play interface of the target media content. The first user can perform a trigger operation on the first transfer icon. In response to the trigger operation of the first user on the first transfer icon, the second status virtual resource is at least partially transferred to the first user.

By displaying the first transfer icon corresponding to the second status virtual resource on the play interface of the target media content, and transferring the second status virtual resource at least partially to oneself according to the trigger operation of the first user, the gameplay of transferring virtual resources can be further enriched and the user experience can be improved.

FIG. 10 is a flowchart of a virtual resource transfer method provided by Embodiment 6 of the present disclosure. On the basis of any of the above embodiments, if a second user watches the target media resource posted by the first user, the virtual resource transfer method further includes:
Step 1001: displaying a first transfer icon corresponding to the second status virtual resource on a target media content play interface;
Step 1002: detecting, in response to a trigger operation of a second user on the first transfer icon, whether there is a preset association relationship between the first user and the second user;
Step 1003: if it is detected that there is a preset association relationship between the first user and the second user, transferring the second status virtual resource at least partially to the second user, and switching the transferred icon into a transferred icon, wherein the transferred icon is configured that the second status virtual resource will no longer be transferred when the second user triggers the transferred icon;
Step 1004: if it is detected that there is no preset association relationship between the first user and the second user, displaying prompt information on a display interface, wherein the prompt information is configured to prompt the second user to establish a preset association relationship with the first user according to the prompt information.

In the present embodiment, the second user can browse the target media content posted by the first user, and in the target media content play interface, it can be detected whether the currently played media content has an associated virtual resource to be transferred, wherein the media content can be the target media content posted by the first user. If it has, a transfer icon corresponding to the virtual resource to be transferred can be displayed on the display interface. The second user can realize the transfer operation of the virtual resource by performing a trigger operation on the transfer icon. Optionally, if the media content does not have an associated virtual resource to be transferred, the current display interface may not be adjusted.

Further, in the case where the trigger operation of the second user on the transfer icon is detected, it is detected whether there is an association relationship between the second user and the first user. The association relationship can be the preset association relationship, which can be that the first user and the second user are friends, or that the first user and the second user pay attention to each other. If there is an association between them, the virtual resource to be transferred can be at least partially transferred to the second user, and the transfer icon can be switched into a transferred icon, wherein the transferred icon is configured such that the virtual resource will no longer be transferred when the second user triggers the transferred icon.

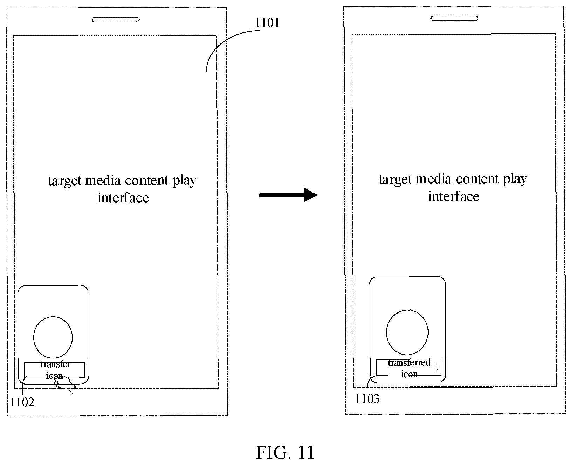

FIG. 11 is a schematic diagram of another interactive interface provided by an embodiment of the present disclosure. As shown in FIG. 11, in the target media content play interface 1101, if the currently played media content posted by the first user has an associated virtual resource to be transferred, a transfer icon 1102 corresponding to the virtual resource to be transferred is displayed on the display interface. The second user can perform a trigger operation on the transfer icon 1102. According to the trigger operation, in the case where there is an association relationship between the first user and the second user, the virtual resource to be transferred is at least partially transferred to the second user, and the transfer icon 1102 is switched into a transferred icon 1103. The transferred icon 1103 is configured such that the virtual resource will no longer be transferred when the second user triggers the transferred icon.

Optionally, if there is no association relationship between the first user and the second user, it is necessary to establish an association relationship first, and then perform the transfer operation of the virtual resource. Specifically, if it is detected that there is no preset association relationship between the first user and the second user, prompt information is displayed on the display interface, and the prompt information is configured to prompt the second user to establish an association relationship with the first user according to the prompt information. In the case where it is detected that the first user has established an association relationship with the second user, the transfer icon can be displayed on the display interface again, so that the second user can realize the virtual resource transfer operation according to the transfer icon.

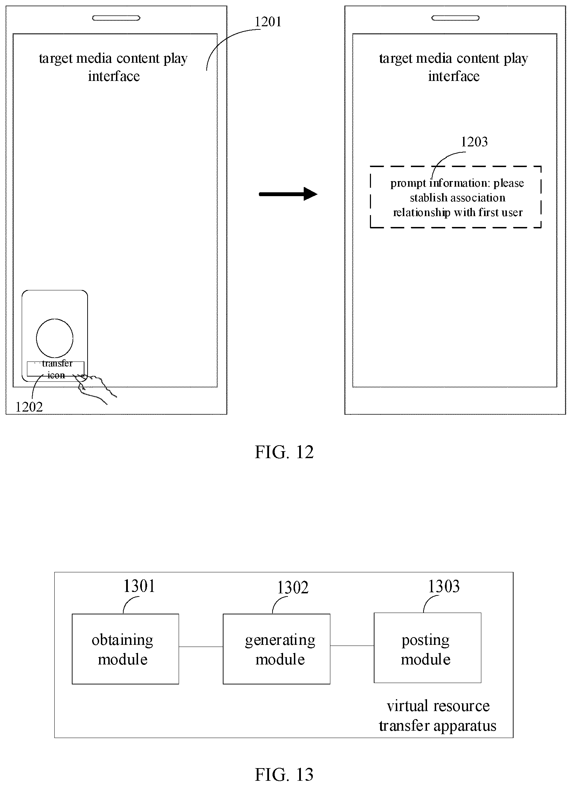

FIG. 12 is a schematic diagram of another interactive interface provided by an embodiment of the present disclosure. As shown in FIG. 12, in the target media content play interface 1201, if the currently played media content posted by the first user has an associated virtual resource to be transferred, a transfer icon 1202 corresponding to the virtual resource to be transferred is displayed on the display interface. The second user can perform a trigger operation on the transfer icon 1202. According to the trigger operation, in the case where there is no association relationship between the first user and the second user, prompt information 1203 is displayed on the display interface, and the prompt information 1203 is configured to prompt the second user to establish an association relationship with the first user according to the prompt information 1203.

In the virtual resource transfer method provided by the present embodiment, it is detected whether the currently played media content has an associated virtual resource to be transferred, and if it has, a transfer icon corresponding to the virtual resource to be transferred is displayed on the display interface, so that the transfer operation of the virtual resource can be realized based on the transfer icon. After the first user triggers the transfer icon and completes the transfer operation of the virtual resource, the transfer icon is switched into a transferred icon, thus ensuring that the second user can only transfer one virtual resource once, and further improving the user experience. In addition, it is detected whether there is an association relationship between the first user and the second user, and if there is an association relationship therebetween, the virtual resource is subjected to a transfer operation, thereby ensuring that the virtual resource transfer operation can be performed between users with a preset relationship.

FIG. 13 is a schematic structural diagram of a virtual resource transfer apparatus provided by Embodiment 7 of the present disclosure. As shown in FIG. 13, in a target application, the apparatus includes an obtaining module 1301, a generating module 1302 and a posting module 1303. The obtaining module 1301 is configured to obtain a first status virtual resource, wherein the first status virtual resource is sent to a first user by a resource distributor. The generating module 1302 is configured to generate a target media content based on the first status virtual resource in response to a preset operation of the first user, wherein the target media content is associated with the first status virtual resource. The posting module 1303 is configured to post the target media content in the target application in response to a posting operation of the first user on the target media content, so that the first status virtual resource is converted into a second status virtual resource, and the second status virtual resource is configured to be at least partially transferred to the first user and/or a second user via the target media content.

Further, on the basis of Embodiment 1, there is a preset association relationship between the first user and the second user.

Further, on the basis of Embodiment 1, the obtaining module is configured to obtain the first status virtual resource in response to a trigger operation of a user on at least one virtual resource obtaining control on a preset interface, wherein the preset interface includes at least one virtual resource obtaining control.

Further, on the basis of Embodiment 1, the generating module is configured to: display a virtual resource show interface, wherein the virtual resource show interface includes at least one first status virtual resource currently obtained by the first user; display a target media content generation interface in response to a select operation of the first user on any first status virtual resource; obtain a media content material generated by the first user based on the target media content generation interface; and generate the target media content based on the first status virtual resource selected by a user and the media content material generated by the first user.

Further, on the basis of any of the above embodiments, the generating module is configured to: obtain a media content material generated by the first user in a target media content generation interface; display a virtual resource configuration interface in response to a trigger operation of the first user on a preset virtual resource configuration icon in the target media content generation interface, wherein the virtual resource configuration interface includes at least one first status virtual resource currently obtained by the first user; and generate, in response to a select operation of the first user on any first status virtual resource, the target media content according to the first status virtual resource selected by the first user and the media content material generated by the first user.

Further, on the basis of any of the above embodiments, the target media content generation interface further includes a first status virtual resource modify control, and the generating module is configured to: display a first status virtual resource modify interface on a display interface in response to a trigger operation of the first user on the first status virtual resource modify control; and modify the first status virtual resource in response to a preset operation of the first user in the first status virtual resource modify interface.

Further, on the basis of any of the above embodiments, the generating module is configured to: display a media content material generation manner list on the target media content generation interface, wherein the media content material generation manner list includes at least two media content material generation manners; obtain, in response to a select operation of the first user on any media content material generation manner, the media content material generated by the first user according to the selected media content material generation manner; and generate the target media content according to the first status virtual resource selected by the first user and the media content material generated by the first user.

Further, on the basis of any of the above embodiments, the media content material generation manners include a custom generation manner and a template shooting manner. The generating module is configured to: obtain, in a case where the media content material generation manner selected by the first user is the custom generation manner, a media content material customized and generated by the first user; or generate, in a case where the media content material generation manner selected by the first user is the template shooting manner, a media content material based on a preset shooting template selected by the user.

Further, on the basis of any of the above embodiments, the generating module is configured to: display a virtual resource configuration interface on a display interface in response to a trigger operation of the first user on a preset virtual resource configuration icon in a target media content generation interface, wherein the virtual resource configuration interface includes at least one first status virtual resource currently obtained by the first user; display a supplementary virtual resource configuration interface on the display interface in response to a select operation of the first user on any first status virtual resource; obtain a supplementary virtual resource determined by the first user in the supplementary virtual resource configuration interface, and determine the first status virtual resource and the supplementary virtual resource as a target virtual resource; and obtain a media content material generated by the first user, and generate the target media content according to the media content material and the target virtual resource.

Further, on the basis of any of the above embodiments, the supplementary virtual resource includes one or more of a first status virtual resource, a second status virtual resource, and a virtual resource customized and input by the first user.

Further, on the basis of any of the above embodiments, the apparatus further includes: a determining module, configured to determine a number of transferable times corresponding to the second status virtual resource; and a transferring module, configured to transfer the second status virtual resource at least partially to the first user and/or the second user according to the number of transferable times, wherein the number of the first user and/or the second user matches the number of transferable times.

Further, on the basis of any of the above embodiments, the transferring module is configured to: divide the second status virtual resource averagely into third virtual resources according to the number of transferable times, so that the third virtual resources are transferred to the first user and/or the second user; or transfer at least part of the second status virtual resource randomly to the first user and/or the second user according to the number of transferable times.

Further, on the basis of any of the above embodiments, the obtaining module is further configured to obtain the first status virtual resource in response to a trigger operation of a user on at least one virtual resource obtaining control on a preset interface, wherein the preset interface includes at least one virtual resource obtaining control.

Further, on the basis of any of the above embodiments, the apparatus further includes: a processing module, configured to display a first transfer icon corresponding to the second status virtual resource on a play interface of the target media content and transfer the second status virtual resource at least partially to the first user in response to a trigger operation of the first user on the first transfer icon.

Further, on the basis of any of the above embodiments, the apparatus further includes: a display module, configured to display a first transfer icon corresponding to the second status virtual resource on a target media content play interface; a detecting module, configured to detect, in response to a trigger operation of a second user on the first transfer icon, whether there is a preset association relationship between the first user and the second user; and a processing module, configured to transfer, in a case where it is detected that there is a preset association relationship between the first user and the second user, the second status virtual resource at least partially to the second user, and switch the transferred icon into a transferred icon, wherein the transferred icon is configured that the second status virtual resource will no longer be transferred when the second user triggers the transferred icon.

Further, on the basis of any of the above embodiments, the apparatus further includes: a processing module, further configured to display, in a case where it is detected that there is no preset association relationship between the first user and the second user, prompt information on a display interface, wherein the prompt information is configured to prompt the first user to establish an association relationship with the second user according to the prompt information.

Another embodiment of the present disclosure provides an electronic device, which includes a processor and a memory;
computer executable instructions are stored in the memory;
upon the processor executing the computer executable instructions stored in the memory, the processor executes the virtual resource transfer method as described in any of the above embodiments.

Another embodiment of the present disclosure provides a computer readable storage medium, computer executable instructions are stored in the computer readable storage medium, and upon a processor executing the computer executable instructions, the virtual resource transfer method as described in any of the above embodiments is realized.

Another embodiment of the present disclosure provides a computer program product, which includes a computer program, and upon the computer program being executed by a processor, the virtual resource transfer method as described in any of the above embodiments is realized.

In order to realize the above embodiments, an embodiment of the present disclosure further provides an electronic device.

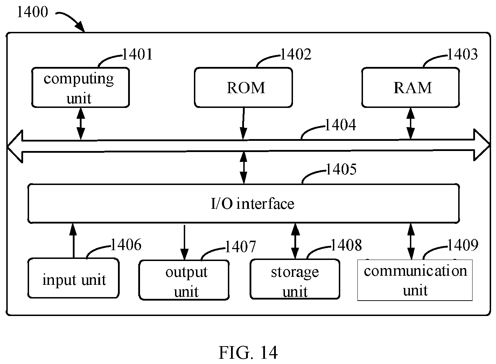

FIG. 14 is a schematic structural diagram of an electronic device provided by Embodiment 8 of the present disclosure. As shown in FIG. 14, a schematic structural diagram of an electronic device 1400 suitable for implementing the embodiments of the present disclosure is shown. The electronic device 1400 can be a terminal device or a server. The terminal device can include, but is not limited to, a mobile terminal, such as a mobile phone, a laptop, a digital broadcast receiver, a personal digital assistant (PDA), a portable Android device (PAD), a portable media player (PMP), a vehicle-mounted terminal (e.g., a vehicle-mounted navigation terminal) and the like, or a fixed terminal, such as a digital TV, a desktop computer and the like. The electronic device shown in FIG. 14 is only exemplary, and should not indicate any limitation to the function and application scope of the embodiments of the present disclosure.

As shown in FIG. 14, the electronic device 1400 can include a computing unit (e.g., a central processing unit, a graphics processing unit, etc.) 1401, which can execute various proper operations and processing based on a program stored in a read only memory (ROM) 1402 or a program loaded from a storage apparatus 1408 into a random access memory (RAM) 1403. The RAM 1403 is further configured to store various programs and data demanded by the electronic device 1400. The processing unit 1401, the ROM 1402 and the RAM 1403 are connected to each other through a bus 1404. An input/output (I/O) interface 1405 is also connected to the bus 1404.

Generally, the I/O interface 1405 can be connected to: an input unit 1406, such as a touch screen, a touch panel, a keyboard, a mouse, a camera, a microphone, an accelerometer, and a gyroscope, etc.; an output unit 1407, such as a liquid crystal display (LCD), a speaker, and a vibrator, etc.; a storage unit 1408, such as a magnetic tape, and a hard disk, etc.; and a communication unit 1409. The communication unit 1409 enables wireless or wired communication between the electronic device 1400 and other devices for data exchanging. Although FIG. 14 shows an electronic device 1400 having various apparatus, it should be understood that the illustrated apparatus are not necessarily required to all be implemented or embodied. Alternatively, more or fewer apparatuses may be implemented or included.

Particularly, according to the embodiments of the present disclosure, the process described above in conjunction with flowcharts can be implemented as a computer software program. For example, a computer program product is further provided as an embodiment of the present disclosure, including a computer program carried on a computer readable medium. The computer program includes program code for performing the method shown in the flowchart. In the embodiment, the computer program can be downloaded and installed from the network via the communication unit 1409, or installed from the storage unit 1408, or installed from the ROM 1402. When the computer program is executed by the computing unit 1401, the functions defined in the method according to the embodiment of the present disclosure are performed.

It should be noted that, the computer readable medium mentioned in the present disclosure can be a computer readable signal medium or a computer readable storage medium or any combination thereof. The computer readable storage medium can be but is not limited to, a system, an apparatus, or a device in an electronic, magnetic, optical, electromagnetic, infrared, or semi-conductive form, or any combination thereof. More specific examples of the computer readable storage medium can be, but are not limited to, an electrical connection with one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device or any combination thereof. In the present disclosure, the computer readable storage medium can be any tangible medium containing or storing a program, and the program can be used by or in combination with an instruction execution system, apparatus, or device. In the present disclosure, the computer readable signal medium can be a data signal transmitted in a baseband or transmitted as a part of a carrier wave, and carrying computer readable program codes. The transmitted data signal can be in various forms, including but not limited to an electromagnetic signal, an optical signal or any proper combination thereof. The computer readable signal medium can be any computer readable medium other than the computer readable storage medium, and can send, propagate or transmit programs to be used by or in combination with an instruction execution system, apparatus or device. The program codes stored in the computer readable medium can be transmitted via any proper medium including but not limited to: a wire, an optical cable, RF (radio frequency) and the like, or any proper combination thereof.

The computer readable medium can be incorporated in the electronic device, or can exist alone without being assembled into the electronic device.

The computer readable medium carries one or more programs. The one or more programs, when executed by the electronic device, cause the electronic device to execute the method according to the above embodiments.

The computer program code for performing the operations disclosed in the present disclosure can be written in one or more programming languages or any combination thereof. The programming languages include, but not limit to an object-oriented programming language, such as Java, Smalltalk, and C++, and a conventional procedural programming language, such as C language or a similar programming language. The program code can be executed entirely on a user computer, partially on the user computer, as a standalone software package, partially on the user computer and partially on a remote computer, or entirely on the remote computer or a server. In a case involving a remote computer, the remote computer can be connected to the user computer through any network, including local area network (LAN) or wide area network (WAN), or can be connected to an external computer (for example, through the Internet provided by an Internet service provider).

Flowcharts and block diagrams in the accompanying drawings illustrate the architectures, functions and operations that can be implemented by a system, a method and a computer program produce according to various embodiments of the present disclosure. In this regard, each block in the flowchart or the block diagram may represent a module, a program segment, or a part of code. The module, the program segment, or the part of code includes one or more executable instructions used for implementing specified logic functions. It should be noted that, in some alternative implementations, the functions marked in blocks can be performed in an order different from the order shown in the drawings. For example, two blocks shown in succession may actually be executed in parallel, or sometimes may be executed in a reverse order, which depends on the functions involved. It should also be noted that each block in the block diagram and/or flowchart and a combination of the blocks in the block diagram and/or flowchart can be implemented by a dedicated hardware-based system that performs specified functions or actions, or can be realized by a combination of dedicated hardware and computer instructions.

The units mentioned in the embodiments of the present disclosure can be implemented by means of software, or otherwise by means of hardware. The name of the unit does not constitute a restriction on the unit itself in some cases. For example, a first obtaining unit can also be described as "a unit that obtains at least two Internet protocol addresses."

The functions described above herein can be executed, at least partially, by one or more hardware logic components. For example, without limitations, example types of hardware logic components that can be used include: a field-programmable gate array (FPGA), an application-specific integrated circuit (ASIC), an application-specific standard product (ASSP), a system on a chip (SOC), a complex programmable logic device (CPLD) and the like.

In the context of the present disclosure, a machine readable medium can be a tangible medium that may contain or store a program, and the program may be used by or in connection with an instruction execution system, apparatus or device. The machine readable medium can be a machine readable signal medium or a machine readable storage medium. The computer readable medium can include, but is not limited to, a system, an apparatus, or a device in an electronic, magnetic, optical, electromagnetic, infrared, or semi-conductive form, or any suitable combination thereof. More specific examples of the machine readable storage medium can include, an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device or any suitable combination thereof.

In a first aspect, according to one or more embodiments of the present disclosure, a virtual resource transfer method is provided, which, in a target application, includes:
obtaining a first status virtual resource, wherein the first status virtual resource is sent to a first user by a resource distributor;
generating a target media content based on the first status virtual resource in response to a preset operation of the first user, wherein the target media content is associated with the first status virtual resource;
posting the target media content in the target application in response to a posting operation of the first user on the target media content, so that the first status virtual resource is converted into a second status virtual resource, and the second status virtual resource is configured to be at least partially transferred to the first user and/or a second user via the target media content.

According to one or more embodiments of the present disclosure, the generating the target media content based on the first status virtual resource in response to the preset operation of the first user includes:
displaying a virtual resource show interface, wherein the virtual resource show interface comprises at least one first status virtual resource currently obtained by the first user;
displaying a target media content generation interface in response to a select operation of the first user on any first status virtual resource;
obtaining a media content material generated by the first user based on the target media content generation interface;
generating the target media content based on the first status virtual resource selected by a user and the media content material generated by the first user.

According to one or more embodiments of the present disclosure, the generating the target media content based on the first status virtual resource in response to the preset operation of the first user includes:
obtaining a media content material generated by the first user in a target media content generation interface;
displaying a virtual resource configuration interface in response to a trigger operation of the first user on a preset virtual resource configuration icon in the target media content generation interface, wherein the virtual resource configuration interface comprises at least one first status virtual resource currently obtained by the first user;
generating, in response to a select operation of the first user on any first status virtual resource, the target media content according to the first status virtual resource selected by the first user and the media content material generated by the first user.

According to one or more embodiments of the present disclosure, the target media content generation interface further comprises a first status virtual resource modify control, and after the displaying the target media content generation interface in response to the select operation of the first user on any first status virtual resource, the method further comprises:
displaying a first status virtual resource modify interface on a display interface in response to a trigger operation of the first user on the first status virtual resource modify control;
modifying the first status virtual resource in response to a preset operation of the first user in the first status virtual resource modify interface.

According to one or more embodiments of the present disclosure, after the displaying the target media content generation interface in response to the select operation of the first user on any first status virtual resource, the method further comprises:
displaying a media content material generation manner list on the target media content generation interface, wherein the media content material generation manner list comprises at least two media content material generation manners;
obtaining, in response to a select operation of the first user on any media content material generation manner, the media content material generated by the first user according to the selected media content material generation manner;
generating the target media content according to the first status virtual resource selected by the first user and the media content material generated by the first user.

According to one or more embodiments of the present disclosure, the media content material generation manners comprises a custom generation manner and a template shooting manner;
the obtaining, in response to the select operation of the first user on any media content material generation manner, the media content material generated by the first user according to the selected media content material generation manner comprises:
in a case where the media content material generation manner selected by the first user is the custom generation manner, obtaining a media content material customized and generated by the first user; or
in a case where the media content material generation manner selected by the first user is the template shooting manner, generating a media content material based on a preset shooting template selected by the user.

According to one or more embodiments of the present disclosure, the generating the target media content based on the first status virtual resource in response to the preset operation of the first user comprises:
displaying a virtual resource configuration interface on a display interface in response to a trigger operation of the first user on a preset virtual resource configuration icon in a target media content generation interface, wherein the virtual resource configuration interface comprises at least one first status virtual resource currently obtained by the first user;
displaying a supplementary virtual resource configuration interface on the display interface in response to a select operation of the first user on any first status virtual resource;
obtaining a supplementary virtual resource determined by the first user in the supplementary virtual resource configuration interface, and determining the first status virtual resource and the supplementary virtual resource as a target virtual resource;
obtaining a media content material generated by the first user, and generating the target media content according to the media content material and the target virtual resource.

According to one or more embodiments of the present disclosure, the supplementary virtual resource comprises one or more of a first status virtual resource, a second status virtual resource, and a virtual resource customized and input by the first user.

According to one or more embodiments of the present disclosure, there is a preset association relationship between the first user and the second user.

According to one or more embodiments of the present disclosure, after the posting the target media content in the target application in response to the posting operation of the first user on the target media content, the method further comprises:
determining a number of transferable times corresponding to the second status virtual resource;
transferring the second status virtual resource at least partially to the first user and/or the second user according to the number of transferable times, wherein a count of the first user and/or the second user matches the number of transferable times.

According to one or more embodiments of the present disclosure, the transferring the second status virtual resource at least partially to the first user and/or the second user according to the number of transferable times comprises:
dividing the second status virtual resource averagely into third virtual resources according to the number of transferable times, so that the third virtual resources are transferred to the first user and/or the second user; or
transferring at least part of the second status virtual resource randomly to the first user and/or the second user according to the number of transferable times.

According to one or more embodiments of the present disclosure, the obtaining the first status virtual resource comprises:
obtaining, in response to a trigger operation of a user on at least one virtual resource obtaining control on a preset interface, the first status virtual resource, wherein the preset interface comprises at least one virtual resource obtaining control.

According to one or more embodiments of the present disclosure, the method further includes:
displaying a transfer icon corresponding to the second status virtual resource on a play interface of the target media content;
transferring the second status virtual resource at least partially to the first user in response to a trigger operation of the first user on the transfer icon.

According to one or more embodiments of the present disclosure, the method further includes:
displaying a first transfer icon corresponding to the second status virtual resource on a target media content play interface;
detecting, in response to a trigger operation of a second user on the first transfer icon, whether there is a preset association relationship between the first user and the second user;
transferring, in a case where it is detected that there is a preset association relationship between the first user and the second user, the second status virtual resource at least partially to the second user, and switching the transferred icon into a transferred icon, wherein the transferred icon is configured that the second status virtual resource will no longer be transferred when the second user triggers the transferred icon.

According to one or more embodiments of the present disclosure, after the detecting, in response to the trigger operation of the second user on the first transfer icon, whether there is a preset association relationship between the first user and the second user, the method further includes:
displaying, in a case where it is detected that there is no preset association relationship between the first user and the second user, prompt information on a display interface, wherein the prompt information is configured to prompt the first user to establish an association relationship with the second user according to the prompt information.

In a second aspect, according to one or more embodiments of the present disclosure, a virtual resource transfer apparatus is provided, which, in a target application, includes:
an obtaining module, configured to obtain a first status virtual resource, wherein the first status virtual resource is sent to a first user by a resource distributor;
a generating module, configured to generate a target media content based on the first status virtual resource in response to a preset operation of the first user, wherein the target media content is associated with the first status virtual resource;
a posting module, configured to post the target media content in the target application in response to a posting operation of the first user on the target media content, so that the first status virtual resource is converted into a second status virtual resource, and the second status virtual resource is configured to be at least partially transferred to the first user and/or a second user via the target media content.

According to one or more embodiments of the present disclosure, the generating module is configured to:
display a virtual resource show interface, wherein the virtual resource show interface includes at least one first status virtual resource currently obtained by the first user;
display a target media content generation interface in response to a select operation of the first user on any first status virtual resource;
obtain a media content material generated by the first user based on the target media content generation interface; and
generate the target media content based on the first status virtual resource selected by a user and the media content material generated by the first user.

According to one or more embodiments of the present disclosure, the generating module is configured to:
obtain a media content material generated by the first user in a target media content generation interface;
display a virtual resource configuration interface in response to a trigger operation of the first user on a preset virtual resource configuration icon in the target media content generation interface, wherein the virtual resource configuration interface includes at least one first status virtual resource currently obtained by the first user; and
generate, in response to a select operation of the first user on any first status virtual resource, the target media content according to the first status virtual resource selected by the first user and the media content material generated by the first user.

According to one or more embodiments of the present disclosure, the target media content generation interface further includes a first status virtual resource modify control, and the generating module is configured to:
display a first status virtual resource modify interface on a display interface in response to a trigger operation of the first user on the first status virtual resource modify control; and
modify the first status virtual resource in response to a preset operation of the first user in the first status virtual resource modify interface.

According to one or more embodiments of the present disclosure, the generating module is configured to:
display a media content material generation manner list on the target media content generation interface, wherein the media content material generation manner list includes at least two media content material generation manners;
obtain, in response to a select operation of the first user on any media content material generation manner, the media content material generated by the first user according to the selected media content material generation manner; and
generate the target media content according to the first status virtual resource selected by the first user and the media content material generated by the first user.

According to one or more embodiments of the present disclosure, the media content material generation manners include a custom generation manner and a template shooting manner; and
the generating module is configured to:
obtain, in a case where the media content material generation manner selected by the first user is the custom generation manner, a media content material customized and generated by the first user; or
generate, in a case where the media content material generation manner selected by the first user is the template shooting manner, a media content material based on a preset shooting template selected by the user.

According to one or more embodiments of the present disclosure, the generating module is configured to:
display a virtual resource configuration interface on a display interface in response to a trigger operation of the first user on a preset virtual resource configuration icon in a target media content generation interface, wherein the virtual resource configuration interface includes at least one first status virtual resource currently obtained by the first user;
display a supplementary virtual resource configuration interface on the display interface in response to a select operation of the first user on any first status virtual resource;
obtain a supplementary virtual resource determined by the first user in the supplementary virtual resource configuration interface, and determine the first status virtual resource and the supplementary virtual resource as a target virtual resource; and
obtain a media content material generated by the first user, and generate the target media content according to the media content material and the target virtual resource.

According to one or more embodiments of the present disclosure, the supplementary virtual resource includes one or more of a first status virtual resource, a second status virtual resource, and a virtual resource customized and input by the first user.

According to one or more embodiments of the present disclosure, there is a preset association relationship between the first user and the second user.

According to one or more embodiments of the present disclosure, the apparatus further includes:
a determining module, configured to determine a number of transferable times corresponding to the second status virtual resource; and
a transferring module, configured to transfer the second status virtual resource at least partially to the first user and/or the second user according to the number of transferable times, wherein the number of the first user and/or the second user matches the number of transferable times.

According to one or more embodiments of the present disclosure, the transferring module is configured to:
divide the second status virtual resource averagely into third virtual resources according to the number of transferable times, so that the third virtual resources are transferred to the first user and/or the second user; or
transfer at least part of the second status virtual resource randomly to the first user and/or the second user according to the number of transferable times.

According to one or more embodiments of the present disclosure, the obtaining module is configured to obtain the first status virtual resource in response to a trigger operation of a user on at least one virtual resource obtaining control on a preset interface, wherein the preset interface includes at least one virtual resource obtaining control.

According to one or more embodiments of the present disclosure, the apparatus further includes: a processing module, configured to:
display a first transfer icon corresponding to the second status virtual resource on a play interface of the target media content; and
transfer the second status virtual resource at least partially to the first user in response to a trigger operation of the first user on the first transfer icon.

According to one or more embodiments of the present disclosure, the apparatus further includes:
a display module, configured to display a first transfer icon corresponding to the second status virtual resource on a target media content play interface;
a detecting module, further configured to detect, in response to a trigger operation of a second user on the first transfer icon, whether there is a preset association relationship between the first user and the second user; and
a processing module, further configured to transfer, in a case where it is detected that there is a preset association relationship between the first user and the second user, the second status virtual resource at least partially to the second user, and switch the transferred icon into a transferred icon, wherein the transferred icon is configured that the second status virtual resource will no longer be transferred when the second user triggers the transferred icon.

According to one or more embodiments of the present disclosure, the apparatus further includes:
a processing module, further configured to display, in a case where it is detected that there is no preset association relationship between the first user and the second user, prompt information on a display interface, wherein the prompt information is configured to prompt the first user to establish an association relationship with the second user according to the prompt information.

In a third aspect, according to one or more embodiments of the present disclosure, an electronic device is provided, which includes at least one processor and a memory;
computer executable instructions are stored in the memory;
upon the at least one processor executing the computer executable instructions stored in the memory, the at least one processor executes the virtual resource transfer method as described in the first aspect and various possible designs of the first aspect.

In a fourth aspect, according to one or more embodiments of the present disclosure, a computer readable storage medium is provided, computer executable instructions are stored in the computer readable storage medium, and upon a processor executing the computer executable instructions, the virtual resource transfer method as described in the first aspect and various possible designs of the first aspect is realized.

In a fifth aspect, according to one or more embodiments of the present disclosure, a computer program product is provided, which includes a computer program, and upon the computer program being executed by a processor, the virtual resource transfer method as described in the first aspect and various possible designs of the first aspect is realized.

In a sixth aspect, according to one or more embodiments of the present disclosure, a computer program is provided, and upon the computer program being executed by a processor, the virtual resource transfer method as described in the first aspect and various possible designs of the first aspect is realized.

The above description is only an explanation of the preferred embodiments of the present disclosure and the applied technical principles. It should be appreciated by those skilled in the art that the disclosure scope involved in the present disclosure is not limited to the technical solutions formed by specific combinations of the above technical features, but also encompasses other technical solutions formed by an arbitrary combination of the above technical features or their equivalent features without departing from the above disclosure concept. The other technical solutions are, for example, technical solutions formed by replacing the above features with technical features having functions similar to those disclosed (but not limited to) in the present disclosure.

Furthermore, while various operations are depicted in a specific order, this should not be understood as requiring that such operations be performed in the specific order shown or in a sequential order. Under certain circumstances, multitasking and parallel processing may be advantageous. Similarly, while several specific implementation details are included in the above discussion, these should not be construed as limitations on the scope of the present disclosure. Some features that are described in the context of separate embodiments can also be implemented in combination in a single embodiment. Conversely, various features that are described in the context of a single embodiment can also be implemented in multiple embodiments separately or in any suitable sub-combination.

Although the subject matter has been described in language specific to a structural feature and/or method logic action, it should be understood that the subject matter defined in the attached claims is not necessarily limited to the specific feature or action described above. Conversely, the specific feature and action described above are only exemplary forms for implementing the claims.

## Claims

1. A virtual resource transfer method, wherein in a target application, the method comprises:
obtaining a first status virtual resource, wherein the first status virtual resource is sent to a first user by a resource distributor;
generating a target media content based on the first status virtual resource in response to a preset operation of the first user, wherein the target media content is associated with the first status virtual resource; and
posting the target media content in the target application in response to a posting operation of the first user on the target media content, so that the first status virtual resource is converted into a second status virtual resource, and the second status virtual resource is configured to be at least partially transferred to the first user and/or a second user via the target media content.

2. The method according to claim 1, wherein the generating the target media content based on the first status virtual resource in response to the preset operation of the first user comprises:
displaying a virtual resource show interface, wherein the virtual resource show interface comprises at least one first status virtual resource currently obtained by the first user;
displaying a target media content generation interface in response to a select operation of the first user on any first status virtual resource;
obtaining a media content material generated by the first user based on the target media content generation interface; and
generating the target media content based on the first status virtual resource selected by a user and the media content material generated by the first user.

3. The method according to claim 1, wherein the generating the target media content based on the first status virtual resource in response to the preset operation of the first user comprises:
obtaining a media content material generated by the first user in a target media content generation interface;
displaying a virtual resource configuration interface in response to a trigger operation of the first user on a preset virtual resource configuration icon in the target media content generation interface, wherein the virtual resource configuration interface comprises at least one first status virtual resource currently obtained by the first user;
generating, in response to a select operation of the first user on any first status virtual resource, the target media content according to the first status virtual resource selected by the first user and the media content material generated by the first user.

4. The method according to claim 2, wherein the target media content generation interface further comprises a first status virtual resource modify control, and after displaying the target media content generation interface in response to the select operation of the first user on any first status virtual resource, the method further comprises:
displaying a first status virtual resource modify interface on a display interface in response to a trigger operation of the first user on the first status virtual resource modify control;
modifying the first status virtual resource in response to a preset operation of the first user in the first status virtual resource modify interface.

5. The method according to claim 2 or 4, wherein after displaying the target media content generation interface in response to the select operation of the first user on any first status virtual resource, the method further comprises:
displaying a media content material generation manner list on the target media content generation interface, wherein the media content material generation manner list comprises at least two media content material generation manners;
obtaining, in response to a select operation of the first user on any media content material generation manner, the media content material generated by the first user according to the selected media content material generation manner;
generating the target media content according to the first status virtual resource selected by the first user and the media content material generated by the first user.

6. The method according to claim 5, wherein the media content material generation manners comprise a custom generation manner and a template shooting manner;
the obtaining, in response to the select operation of the first user on any media content material generation manner, the media content material generated by the first user according to the selected media content material generation manner comprises:
if the media content material generation manner selected by the first user is the custom generation manner, obtaining a media content material customized and generated by the first user; or
if the media content material generation manner selected by the first user is the template shooting manner, generating a media content material based on a preset shooting template selected by the user.

7. The method according to any one of claims 1-6, wherein the generating the target media content based on the first status virtual resource in response to the preset operation of the first user comprises:
displaying a virtual resource configuration interface on a display interface in response to a trigger operation of the first user on a preset virtual resource configuration icon in a target media content generation interface, wherein the virtual resource configuration interface comprises at least one first status virtual resource currently obtained by the first user;
displaying a supplementary virtual resource configuration interface on the display interface in response to a select operation of the first user on any first status virtual resource;
obtaining a supplementary virtual resource determined by the first user in the supplementary virtual resource configuration interface, and determining the first status virtual resource and the supplementary virtual resource as a target virtual resource;
obtaining a media content material generated by the first user, and generating the target media content according to the media content material and the target virtual resource.

8. The method according to claim 7, wherein the supplementary virtual resource comprises one or more of a first status virtual resource, a second status virtual resource, and a virtual resource customized and input by the first user.

9. The method according to any one of claims 1-8, wherein there is a preset association relationship between the first user and the second user.

10. The method according to any one of claims 1-9, wherein after posting the target media content in the target application in response to the posting operation of the first user on the target media content, the method further comprises:
determining a number of transferable times corresponding to the second status virtual resource;
transferring the second status virtual resource at least partially to the first user and/or the second user according to the number of transferable times, wherein a count of the first user and/or the second user matches the number of transferable times.

11. The method according to claim 10, wherein the transferring the second status virtual resource at least partially to the first user and/or the second user according to the number of transferable times comprises:
dividing the second status virtual resource averagely into third virtual resources according to the number of transferable times, so that the third virtual resources are transferred to the first user and/or the second user; or
transferring at least part of the second status virtual resource randomly to the first user and/or the second user according to the number of transferable times.

12. The method according to any one of claims 1-11, wherein the obtaining the first status virtual resource comprises:
obtaining, in response to a trigger operation of a user on at least one virtual resource obtaining control on a preset interface, the first status virtual resource, wherein the preset interface comprises at least one virtual resource obtaining control.

13. The method according to any one of claims 1-12, further comprising:
displaying a transfer icon corresponding to the second status virtual resource on a play interface of the target media content; and
transferring the second status virtual resource at least partially to the first user in response to a trigger operation of the first user on the transfer icon.

14. A virtual resource transfer method, wherein in a target application, the method comprises:
displaying a transfer icon corresponding to a second status virtual resource on a target media content play interface;
detecting, in response to a trigger operation of a second user on the transfer icon, whether there is a preset association relationship between a first user and the second user;
if it is detected that there is a preset association relationship between the first user and the second user, transferring the second status virtual resource at least partially to the second user, and switching the transferred icon into a transferred icon, wherein the transferred icon is configured such that the second status virtual resource will no longer be transferred when the second user triggers the transferred icon,
wherein the second status virtual resource is converted from a first status virtual resource in response to a posting operation of the first user on a target media content, and the posting operation is configured to post the target media content in the target application.

15. The method according to claim 14, wherein after detecting whether there is a preset association relationship between the first user and the second user in response to the trigger operation of the second user on the transfer icon, the method further comprises:
if it is detected that there is no preset association relationship between the first user and the second user, displaying prompt information on a display interface, wherein the prompt information is configured to prompt the second user to establish an association relationship with the first user according to the prompt information.

16. A virtual resource transfer apparatus, wherein in a target application, the apparatus comprises:
an obtaining module, configured to obtain a first status virtual resource, wherein the first status virtual resource is sent to a first user by a resource distributor;
a generating module, configured to generate a target media content based on the first status virtual resource in response to a preset operation of the first user, wherein the target media content is associated with the first status virtual resource;
a posting module, configured to post the target media content in the target application in response to a posting operation of the first user on the target media content, so that the virtual resource associated with the target media content is configured to be at least partially transferred to the first user and/or a second user via the target media content.

17. An electronic device, comprising: a processor and a memory;
wherein computer executable instructions are stored in the memory;
upon the processor executing the computer executable instructions stored in the memory, the processor executes the virtual resource transfer method according to any one of claims 1-15.

18. A computer readable storage medium, wherein computer executable instructions are stored in the computer readable storage medium, and upon a processor executing the computer executable instructions, the virtual resource transfer method according to any one of claims 1-15 is realized.

19. A computer program product, comprising a computer program, wherein upon the computer program being executed by a processor, the virtual resource transfer method according to any one of claims 1-15 is realized.

20. A computer program, wherein upon the computer program being executed by a processor, the virtual resource transfer method according to any one of claims 1-15 is realized.
